# EUROPÄISCHE PATENTSCHRIFT

(11) **EP 3 658 328 B1**
(45) Veröffentlichungstag und Bekanntmachung des Hinweises auf die Patenterteilung: **30.12.2020**
(21) Anmeldenummer: 19705304.4
(22) Anmeldetag: 08.02.2019
(51) Int. Cl.: B33Y 10/00, B23P 15/00

(54) **VERFAHREN ZUM HERSTELLEN EINES STRUKTURBAUTEILS AUS EINEM HOCHFESTEN LEGIERUNGSWERKSTOFF**
METHOD FOR PRODUCING A STRUCTURAL COMPONENT FROM A HIGH-STRENGTH ALLOY MATERIAL
PROCÉDÉ DE FABRICATION D'UN ÉLÉMENT DE STRUCTURE COMPOSÉ D'UN MATÉRIAU D'ALLIAGE HAUTE RÉSISTANCE

(30) Priorität: 09.02.2018 DE 102018102903
(43) Veröffentlichungstag der Anmeldung: 03.06.2020
(73) Patentinhaber: Otto Fuchs - Kommanditgesellschaft -, 58540 Meinerzhagen (DE)
(72) Erfinder: MEINERS, Frank, 58540 Meinerzhagen (DE); KWIATKOWSKI, Lukas, 58540 Meinerzhagen (DE); BAMBACH, Markus, 03046 Cottbus (DE)
(74) Vertreter: Haverkamp, Jens
(86) Internationale Anmeldenummer: PCT/EP2019/053082
(87) Internationale Veröffentlichungsnummer: WO 2019/154957

(56) Entgegenhaltungen:
- EP-A1- 2 962 788
- EP-A1- 3 251 787
- WO-A1-2017/196605
- US-A- 2 491 878
- US-A1- 2007 084 905
- US-A1- 2011 127 315
- US-A1- 2015 231 690
- US-A1- 2015 247 474
- US-A1- 2016 010 469

## Beschreibung

Die Erfindung betrifft ein Verfahren zum Herstellen eines verschiedene Bauteilabschnitte aufweisenden einstückigen Strukturbauteils zum Aufbau einer größeren Struktur, wie diese typischerweise in der Luft- und Raumfahrttechnik eingesetzt werden, aus einem hochfesten Legierungswerkstoff. Ein solches Verfahren ist aus der US 2007/084905 A1 bekannt.

Strukturbauteile mit verschiedenen Bauteilabschnitten sind Teile, die in sich strukturiert sind und als solche am Aufbau einer größeren Struktur beteiligt sind bzw. sein können. Derartige Strukturbauteile sind einstückig und werden beispielsweise in der Luft- und Raumfahrttechnik eingesetzt, etwa als Rippen, Spanten, Führungsschienen für Flügelklappen und dergleichen. Eingesetzt werden hierfür hochfeste Legierungswerkstoffe, wie höchstfeste Aluminiumwerkstoffe oder Titanwerkstoffe. Aus Titanwerkstoffen hergestellte Strukturbauteile substituieren im zunehmenden Maße solche aus höchstfesten Aluminiumlegierungen, da diese in Kontakt mit kohlefaserverstärkten Kunststoffbauteilen zu Korrosion neigen. In zunehmendem Maße werden in Flugzeugen kohlefaserverstärkte Kunststoffbauteile eingesetzt. Ein solches aus einem Titanwerkstoff hergestelltes Strukturbauteil wird durch Zerspanung einer geschmiedeten Vorform hergestellt. Hierbei wird dem Schmieden im (α + β)-Gebiet aufgrund der geringeren Prozesstemperaturen und des geringeren Anlagenaufwandes einem Präzisions-Isothermschmieden im β-Gebiet der Legierung bevorzugt. Aufgrund des hohen Umformwiderstandes dieses Werkstoffes - gleiches gilt prinzipiell auch für andere hochfeste Legierungswerkstoffe, wie beispielsweise Nickel-Basislegierungen und Kobalt-Basislegierungen - ist ein oft sehr hohes Aufmaß erforderlich, da der Schmiedeprozess global auf das Werkstück wirkt. Vor dem Hintergrund zunehmend komplexer ausgelegter Strukturbauteile erhöhen sich bei der Herstellung derartiger strukturierter Strukturbauteile die Werkzeugkosten, der Werkzeugverschleiß und die Fehleranfälligkeit. Aus diesem Grunde wird die Ausbildung der Endkontur in nachgelagerte Zerspanungsprozesse verlagert, was wiederum im Ergebnis dazu führt, dass die Materialausnutzung mitunter nur 40% oder weniger, bei einigen Bauteilen nur etwa 10% des ursprünglich eingesetzten Materials beträgt. Abgesehen von dem hohen Zerspanungsaufwand verteuert die geringe Materialausnutzung die hergestellten Strukturbauteile.

Generative Verfahren zum Herstellen von bestimmten Gegenständen sind bekannt. Gegenüber dem vorstehend beschriebenen Verfahren zu Herstellen von Strukturbauteilen lässt sich durch Herstellen derartiger Strukturbauteile durch generative Fertigung der Materialeinsatz optimieren. Problematisch ist allerdings, dass die mechanische Belastbarkeit von durch generative Verfahren hergestellten Gegenstände in vielen Fällen nicht den gewünschten Belastungsanforderungen entspricht. Aus DE 10 2014 012 480 B4 ist ein Verfahren zum Herstellen einer Beschaufelung einer Strömungsmaschine bekannt. Bei diesem Verfahren werden auf einen vorgefertigten Schaufelträger die einzelnen Schaufeln durch generative Fertigung ausgebildet. Bei dem Schaufelträger handelt es sich um einen solchen herkömmlicher Art mit einer kreisrunden Grundfläche und einer axialen Lagerbohrung. So wird bei diesem vorbekannten Verfahren die generative Fertigung genutzt, um die mitunter komplizierte Geometrie der Schaufeln der Beschaufelung herstellen zu können.

Ein ähnliches Verfahren ist aus DE 10 2006 049 216 A1 bekannt. Das in diesem Stand der Technik offenbarte Verfahren dient zur Herstellung eines Turbinenrotors, wobei der Turbinenrotor für eine Luftkühlung ein inneres Kanalsystem aufweist. Bei diesem Verfahren ist zumindest ein Abschnitt des Turbinenrotors durch ein generatives Herstellungsverfahren erzeugt worden. Gemäß einem bevorzugten Ausführungsbeispiel ist der gesamte Turbinenrotor durch eine generative Fertigung hergestellt worden.

EP 3 251 787 A1 offenbart ein Verfahren zur Herstellung eines Bauteils einer Rotationsmaschine. Mit dem in diesem Dokument offenbarten Verfahren wird kein Strukturbauteil hergestellt. Bei dem in diesem Dokument beschriebenen Verfahren wird ein Rohling, beispielsweise durch Schmieden als Substrat bereitgestellt. Bei dem herzustellenden Bauteil ist es erforderlich, in radialer Richtung von einer zentralen Bohrung ausgehend Kanäle nach außen hin vorzusehen. Da das Einbringen von Kanälen im Wege des Schmiedeschrittes sich nicht realisieren lässt, sieht dieses vorbekannte Verfahren einen subtraktiven Bearbeitungsschritt vor, mit dem ein Teil der Kanäle bezogen auf ihren Durchmesser in das Schmiedeteil eingebracht wird. Durch diesen Bearbeitungsschritt werden in die Deckfläche Nuten eingebracht. Geschlossen werden diese Halb-Kanäle durch eine anschließend durchgeführte generative Fertigung.

Gleiches gilt für WO 2017/196605 A1. Auch bei dem mit dem in diesem Dokument offenbarten Verfahren hergestellten Körper handelt es sich nicht um ein Strukturbauteil, sondern um einen Ventilkörper. Bei diesem vorbekannten Verfahren wird der additive Fertigungsschritt genutzt, um kundenspezifische Anschlussgeometrien zu verwirklichen.

US 2016/0010469 A1 beschriebt ein Verfahren zum Herstellen eines Rotors. Bei dem in diesem Dokument beschriebenen Verfahren wird zunächst die Nabe hergestellt, und zwar mit einem Teller, auf dem die Flügel schichtweise durch ein generatives Verfahren aufgetragen werden. Bezüglich der Nabe ist lediglich offenbart, dass diese mit einem herkömmlichen Verfahren hergestellt ist. Bezüglich der Flügel wird ausgeführt, dass die mit einem generativen Verfahren hergestellten Flügel abschnittsweise aus unterschiedlichen Materialien hergestellt werden können.

US 2007/0084905 A1 betrifft eine strukturierte Platine, ein sogenanntes Tailored Blank. Auf einer als Substrat dienenden Grundplatte werden verschiedene vorgefertigte Bauteilabschnitte angeordnet und durch Reibschweißen miteinander verbunden. Generative Fertigungsverfahren sind in diesem Stand der Technik nicht angesprochen.

US 2015/0247474 A1 beschreibt einen Kolben für eine Verbrennungskraftmaschine mit einem Kühlkanal im Bereich des Kolbenbodens. Der Kühlkanal wird ähnlich wie dieses vorstehend zu EP 3 251 787 A1 beschrieben ist, zum Teil in den Kolbenboden eingebracht. Die auf diese Weise erzeugte Nut wird anschließend durch eine generative Fertigung geschlossen. Auch bei diesem Bauteil handelt es sich nicht um ein Strukturbauteil. Überdies erfolgt eine Aufteilung, welche Bereiche generativ und welche nicht generativ gefertigt werden, nicht abhängig von dem jeweiligen Anforderungsprofil.

US 2015/0231690 A1 offenbart ein Verfahren zum Herstellen eines Turbinenrotors. Auf Grund der Größe eines solchen Turbinenmotors kann dieser in aller Regel nur unzureichend durch Schmieden in seine gewünschte Form gebracht werden. Daher werden diejenigen Bereiche, die im Gesenk nicht gefüllt worden sind, mit Material ergänzt, und zwar durch Auftragen von Material.

US 2011/0127315 A1 offenbart ein Verfahren, um einen Kragen an einen rohrförmigen Gegenstand anzubringen. Dieses erfolgt durch Auftragsschweißen. Auch bei diesem Stand der Technik wird derjenige Anteil, der den Kragen bildet, ausschließlich aus geometrischen Gründen durch Auftragsschweißen hergestellt, da dieses bei der Herstellung des Rohres nicht möglich ist.

US 2 491 878 A offenbart einen Zylinder für eine Verbrennungskraftmaschine, bei dem außenseitig die Kühlrippen durch daran angeschweißte Drahtwicklungen ausgebildet werden. Dieses stellt nichts anderes dar als die Herstellung der Kragen beim Gegenstand der US 2011/0127315 A1.

EP 2 962 788 A1 betrifft in einer Weiterbildung eines generativen Verfahrens, und zwar, dass nach jeder Auftragsschicht die erstellte Schicht einem Walzprozess unterworfen wird.

Generative Fertigungsverfahren werden auch eingesetzt, um beispielsweise höher belastete Stellen eines Bauteils durch einen Materialauftrag zu verstärken. Diese Verstärkung kann in Form von Rippen, eines Netzes oder flächiger Elemente, durchaus unterschiedlicher Dicke über die Fläche vorgenommen werden. Diese generativ hergestellten Bauteilabschnitte dienen ausschließlich Verstärkungszwecken.

Bei diesen vorbekannten Verfahren wird die generative Fertigung zum Herstellen bestimmter Bauteile, insbesondere mit Geometrien, die mit anderen Herstellverfahren nicht oder nur mit höherem Aufwand herstellbar wären und sich auch zum Herstellen von Einzelstücken oder Kleinserienteilen eignen. Dabei werden lediglich diejenigen Bauteilabschnitte generativ hergestellt, die sich mit herkömmlichen Herstellungsschritten entweder nicht oder nur mit einem nicht vertretbaren Aufwand herstellen ließen.

Ausgehend von diesem diskutierten Stand der Technik liegt der Erfindung daher die Aufgabe zugrunde, ein Verfahren zum Herstellen eines verschiedene Strukturen aufweisenden Strukturbauteils aus einem hochfesten Legierungsmaterial, beispielsweise einer Titanlegierung vorzuschlagen, mit dem ein solches Strukturbauteil nicht nur unter Anwendung eines Schmiedeschrittes hergestellt werden kann, sondern dass die zum Stand der Technik vorstehend aufgezeigten Nachteile zumindest weitgehend vermieden sind.

Gelöst wird diese Aufgabe erfindungsgemäß durch ein eingangs genanntes, gattungsgemäßes Verfahren, bei dem
- das zu erstellende Strukturbauteil in zumindest zwei sich bezüglich ihres Anforderungsprofiles bei der späteren Verwendung des Strukturbauteils unterscheidende Bauteilabschnitte unterteilt wird, wobei ein Bauteilabschnitt als Kernsegment bei der Verwendung des Strukturbauteils einem in Bezug auf auftretende Belastungen höheren Anforderungsprofil und der zumindest eine weitere Bauteilabschnitt einem geringeren Anforderungsprofil genügen muss,
- in einem ersten Fertigungsschritt zum Erstellen des Kernsegmentes mit den höheren Anforderungen ein Rohling durch Massivumformen bereichsweise in eine endkonturnahe oder endkonturgenaue Form gebracht wird,
- in zumindest einem nachfolgenden Schritt auf zumindest einem durch den Massivumformschritt noch nicht in seine endkonturnahe oder endkonturgenaue Form gebrachten Oberflächenbereich des Kernsegmentes als Substrat zum Ausbilden des zumindest einen Bauteilabschnittes mit dem geringeren Anforderungsprofil dieser Bauteilabschnitt durch ein generatives Fertigungsverfahren auf den vorgesehenen Oberflächenbereich des Rohlings aufgebracht wird, um auch diese Bereiche des massivumgeformten Kernsegmentes in eine endkonturnähere Form zu bringen und
- anschließend das auf diese Weise hergestellte Halbzeug als komplettierte Vorform ein- oder mehrschrittig in seine Endkontur gebracht wird.

Unter dem im Rahmen dieser Ausführung benutzten Begriff "Strukturbauteil" ist jedwedes Bauteil zu verstehen, welches mehrere, insbesondere verschiedene Strukturen in Form von Bauteilabschnitten aufweist und somit in sich vereint. Ein solches Strukturbauteil hat durch die Summe der einzelnen Bauteilabschnitte seine finale Struktur erhalten. Zumindest eine als Bauteilabschnitt bzw. Kernsegment angesprochene Struktur eines solchen Strukturbauteils ist durch Massivumformen geformt worden. Der zumindest eine weitere Bauteilabschnitt ist auf dem massivumgeformten Bauteilabschnitt durch ein generatives Fertigungsverfahren aufgetragen und auf diese Weise daran angeformt. Somit sind unter dem benutzten Begriff "Strukturbauteil" solche Bauteile zu verstehen, die im engeren Sinne Strukturbauteile sind und somit am Aufbau größerer Strukturen beteiligt sind oder beteiligt sein können, wie beispielsweise Rippen, Profile oder Spanten.

Das gemäß dem erfindungsgemäßen Verfahren hergestellte Strukturbauteil ist im Ergebnis zwar einstückig, wie dieses für hochbelastete Strukturbauteile gewünscht ist, jedoch werden bestimmte Bauteilabschnitte - einzelne Strukturen (Bauteilabschnitte) des Strukturbauteils - grundsätzlich unabhängig voneinander hergestellt. Somit kann jeder Bauteilabschnitt mit einem demjenigen Verfahren hergestellt werden, mit dem sich die an diesen Bauteilabschnitt gestellten Anforderungen, den Umständen entsprechend, insbesondere kostengünstig oder auch hinsichtlich ihrer Eigenschaften realisieren lassen. Dieses bedeutet nicht, dass notwendigerweise jeder Bauteilabschnitt mit dem ein Optimum an den gewünschten Eigenschaften bereitstellenden Herstellungsverfahren hergestellt sein muss. Vielmehr steht im Vordergrund, dass auf Grund der mehrteiligen Herstellung im Unterschied zu einteilig hergestellten Strukturbauteilen dieser Art einzelne Bauteilabschnitt nur geringeren Anforderungen genügen müssen und daher mit anderen, zumeist kostengünstigeren oder einfacher durchzuführenden Herstellungsprozessen erstellt werden können. Somit kann es sich bei diesen weiteren von dem ersten Bauteilabschnitt - dem Kernsegment - separat hergestellen Bauteilabschnitten um Gussstücke, Schmiedestücke, durch ein generatives Verfahren hergestellte Teile oder dergleichen handeln. Zudem besteht die Möglichkeit, ein oder mehrere dieser weiteren Bauteilabschnitte über ein generatives Fertigungsverfahren herzustellen, und zwar unter Verwendung des ersten Bauteilabschnittes als Substrat, auf das unmittelbar der oder die weiteren Bauteilabschnitte durch ein solches generatives Fertigungsverfahren generiert werden.

Somit ist dieses durch verschiedene Bauteilabschnitte strukturierte Strukturbauteil in seine Bauteilabschnitte unterteilt, wobei sich zumindest die Anforderungen an das Kernsegment von denjenigen der weiteren Bauteilabschnitte bei der vorgesehenen Verwendung des Strukturbauteils unterscheiden. Die Schnittstelle zwischen zwei Bauteilabschnitten ist daher grundsätzlich nicht durch die Geometrie der einzelnen Strukturen des zu erstellenden Strukturbauteils, sondern durch die an unterschiedliche Bauteilabschnitte gestellten unterschiedlichen Anforderungen gebildet.

Der erste Bauteilabschnitt - das Kernsegment - wird durch Massivumformen hergestellt. Durch Massivumformen lässt sich ein Kernsegment mit hohen dynamischen und statischen Festigkeitseigenschaften herstellen. In Frage kommen als Massivumformprozesse grundsätzlich das Strangpressen, das Ringwalzen oder das Schmieden. Typischerweise erfolgt das Massivumformen bei erhöhten Temperaturen.

Das auf diese Weise hergestellte, verschiedene Bauteilabschnitte aufweisende Strukturbauteil ist das Ergebnis typischerweise unterschiedlicher Herstellungs- bzw. Formgebungsprozesse, wobei unterschiedliche Bauteilabschnitte des Strukturbauteils grundsätzlich unter Anwendung unterschiedlicher Prozessrouten hergestellt sind, sodass ein solches strukturiertes Strukturbauteil bezüglich seiner Herstellung als Hybrid-Strukturbauteil angesprochen werden kann. Dabei ist von Bedeutung, dass vor dem eigentlichen Fertigen eines solchen Strukturbauteils zunächst die unterschiedlichen Bauteilabschnitte definiert werden, wobei sich die Bauteilabschnitte durch das an diese jeweils gestellte Anforderungsprofil unterscheiden, beispielsweise bezüglich des an einzelne Bauteilabschnitte gestellten mechanischen Anforderungsprofils. Ein solches Anforderungsprofil an einen Bauteilabschnitt bei dem Einsatz bzw. der Verwendung des Strukturbauteils betrifft in erster Linie das Anforderungsprofil in Bezug auf mechanische Belastungen, wie beispielsweise Festigkeiten, Härte, Schwingfestigkeit und dergleichen. So kann bei einem Strukturbauteil vorgesehen sein, dass ein zentraler Bauteilabschnitt - das Kernsegment - einer höheren mechanischen Belastung genügen muss, während andere, daran angeformte Bauteilabschnitte nur einem geringeren mechanischen Anforderungsprofil genügen müssen. Die Bauteilabschnitte, an die ein höheres, insbesondere mechanisches Anforderungsprofil gestellt ist, werden durch Massivumformen, etwa Schmieden endkonturnah oder endkonturgenau geformt, jedenfalls soweit, dass möglichst wenig Material, wenn erforderlich, zum Einstellen der Endkontur zerspanend abgetragen werden muss. Diese Bauteilabschnitte stellen bei solchen Strukturbauteilen typischerweise das Kernsegment dar. An dieses durch Massivumformen geformte Kernsegment ist zumindest ein Bauteilabschnitt angeformt; typischerweise sind mehrere Bauteilabschnitte an ein solches Kernsegment angeformt, auf die nur eine geringere mechanische Belastung bei dem späteren Einsatz des Strukturbauteils wirkt. Daher müssen diese Bauteilabschnitte nur einem geringeren Anforderungsprofil genügen. Dieser eine oder diese mehreren weiteren Bauteilabschnitte können durch ein generatives Fertigungsverfahren auf einen Bereich der Mantelfläche des Kernsegmentes aufgetragen bzw. angeformt werden. Hierbei kann es sich um Fortsätze, wie Anbindungspunkte, Rippen, Aufnahmen für Bauteile, etwa Sensoren oder dergleichen handeln. Diese beispielsweise durch ein generatives Fertigungsverfahren generierten Bauteilabschnitte können eine lokale Erstreckung aufweisen oder auch umfänglich sowohl in Querrichtung als auch in Längsrichtung des Kernsegmentes über die gesamte oder einen Teil dieser Erstreckung geformt sein. Diese Bauteilabschnitte sind zumeist für die Formkomplexität derartiger Strukturbauteile verantwortlich. Etwa durch generatives Auftragen von hochfestem Legierungswerkstoff können ohne großes Aufmaß auch komplizierte Geometrien erzeugt werden, vor allem auch solche, die durch Schmieden als beispielhaftes Massivumformverfahren des Strukturbauteils als Ganzes nicht geformt werden können, wie beispielsweise hinterschnittene Abschnitte. Insofern bilden bestimmte Bereiche der Mantelfläche des geschmiedeten Bauteilabschnitts das Substrat, auf welches die additiv gefertigten Bauteilabschnitte erzeugt werden.

Sind bei einem solchen Strukturbauteil verschiedene Bauteilabschnitte neben dem Kernsegment vorgesehen, können auch diese auf unterschiedlichen Prozessrouten hergestellt und an das Kernsegment angeschlossen werden. So ist es beispielsweise möglich, in Abhängigkeit von der auszubildenden Struktur als Bauteilabschnitt und den daran gestellten Anforderungen ein oder mehrere, an das Kernsegment angeformte Bauteilabschnitte durch generative Fertigung zu erzeugen.

Bei der Definition der an das Kernsegment anzuformenden Bauteilabschnitte wird man die Schnittstelle zwischen dem Kernsegment und einem solchen Bauteilabschnitt an einer Position des Strukturbauteils festlegen, in dem das Kernsegment durch den Anschluss des Bauteilabschnittes hinsichtlich der an das Kernsegment gestellten Anforderungen nicht nachteilig beeinflusst wird. Zu diesem Zweck kann das Kernsegment von diesem abragende Übergangszonen, etwa in Form von Anbindungssockeln aufweisen, an die dann ein separat hergestellter Bauteilabschnitt angeschlossen oder im Falle einer generativen Fertigung eines solchen Bauteilabschnittes unter Verwendung des Kernsegmentes als Substrat aufgetragen wird. Die Höhe eines solchen Anbindungssockels ist so ausgelegt, dass die zum Anbinden eines Bauteilabschnittes oder zum Auftragen desselben eingesetzte thermische Energie zwar das Gefüge in dem Anbindungssockel beeinflusst, nicht jedoch die übrigen Bestandteile des Kernsegmentes. Das Kernsegment braucht daher kein Übermaß für die ansonsten einzuberechnende Gefügeänderung im Anbindungsbereich eines daran anzuformenden Bauteilabschnittes aufzuweisen. Dies reduziert den Materialeinsatz.

Es wird angenommen, dass im Rahmen dieser Ausführungen zum ersten Mal bei einem Strukturbauteil vor seiner Herstellung bezüglich der darauf bei einem Einsatz desselben in unterschiedlichen Bereichen wirkende Anforderungsprofile unterschiedliche Bauteilabschnitte definiert werden, welche Bauteilabschnitte sodann mit unterschiedlichen Herstellungsverfahren erzeugt werden. Hierdurch unterscheidet sich das erfindungsgemäße Verfahren von dem Stand der Technik, bei dem es nur auf die Herstellbarkeit von Bauteilabschnitten ankam, um zu entscheiden, ob diese generativ oder konventionell hergestellt werden.

Durch diese Strukturbauteilunterteilung wird auch die Möglichkeit eröffnet, ein Kernsegment sowie zumindest ein daran angeformten Bauteilabschnitt aufweisendes Strukturbauteil in verschiedenen Varianten herzustellen, wobei das massivumgeformte, beispielsweise geschmiedete Kernsegment bei den unterschiedlichen Varianten das gleiche Teil ist und die Unterscheidung durch den oder die daran angeschlossenen Bauteilabschnitte vorgenommen wird. Auf ein solchermaßen ausgelegtes Verfahren wird nachstehend noch eingegangen werden.

Im Falle eines generativen Fertigungsverfahrens zum Herstellen des zumindest einen weiteren Bauteilabschnittes wird, vor allem wenn unmittelbar auf dem Kernsegment erzeugt, ein generatives Fertigungsverfahren eingesetzt, bei dem Metallpulver oder Metalldraht durch Zufuhr von Energie verschmolzen wird. Typischerweise werden zur Erstellung der Rohform für diese Bereiche mittels des generativen Fertigungsverfahrens diese aus einem Legierungspulver oder-draht hergestellt, das demjenigen des Kernsegmentes entspricht. Zum Aufbau der durch ein generatives Fertigungsverfahren gebildeten Bauteilabschnitte können auch Legierungsvarianten oder eine andere Metalllegierung verwendet werden. In einem solchen Fall ist darauf zu achten, dass eine bestimmungsgemäße Fügeverbindung zwischen dem Substrat und dem darauf durch das generative Verfahren aufgebrachten Material besteht. Das generative Fertigungsverfahren kann beispielsweise als Laserauftragsschweißen, Lichtbogenauftragsschweißen oder auch durch Elektronenstrahlauftragsschweißen, nur um einige der möglichen Verfahren zu nennen, durchgeführt werden. Mittels eines oder mehrerer derartiger Schritte werden die durch den Massivumformprozess noch nicht in eine endkonturnahe oder endkonturgenaue Form gebrachten Bauteilabschnitte in eine endkonturnahe Form aufgebaut. In einem anschließenden ein- oder mehrschrittig durchgeführten Bearbeitungsschritt können diese generativ aufgebauten Bauteilabschnitte in ihre Endkontur gebracht werden. In demselben Bearbeitungsschritt können auch der oder die endkonturnah massivumgeformten Bauteilabschnitte in ihre Endkontur gebracht werden. Bei diesen Bearbeitungsschritten kann es sich beispielsweise um einen Schmiedeschritt, mit dem die generativ erzeugten Bereiche zu einem gewissen Maß umgeformt werden, und/oder um eine spanende Bearbeitung handeln. Durch einen Umformschritt mit einem nur geringen Umformgrad wird das Gefüge des generativ gefertigten Bauteilabschnitts für eine anschließend durchzuführende Wärmebehandlung zum Homogenisieren des Gefüges optimiert. Zudem wird durch einen solchen Schritt die Spannungsaufnahme dieses Bauteilabschnittes verbessert. Je nach Ausgestaltung des Bauteilhalbzeuges bzw. des oder der in ihre Endkontur zu bringenden Bauteilabschnitte kann es sich bei der spanenden Bearbeitung beispielsweise um ein Formfräsen, ein Drehen, Bohren oder dergleichen handeln. Auch eine Kombination dieser Maßnahmen ist möglich, ebenso wie das nachträgliche Einbringen eines geringen Umformgrades.

Gefolgt werden kann das vorbeschriebene Herstellungsverfahren durch eine Wärmebehandlung zum Zwecke einer Homogenisierung des Gefüges des massivumgeformten, beispielsweise geschmiedeten Bauteilabschnitts sowie derjenigen Bauteilabschnitte, die mit einem generativen Fertigungsverfahren hergestellt worden sind, und/oder eine Kaltumformung, etwa ein Recken oder Stauchen des in seiner Endkontur gebrachten Strukturbauteils.

Bei derartigen, verschiedene Bauteilabschnitte aufweisenden, einteiligen Strukturbauteilen, die vor allem in der Luft- und Raumfahrttechnik eingesetzt werden, vereint ein solches Strukturbauteil die positiven Eigenschaften eines massivumgeformten Rohlings mit den Eigenschaften eines durch ein generatives oder ein separates Fertigungsverfahren hergestellten Bauteils hinsichtlich der mit einem solchen Verfahren herstellbaren komplexen Geometrien. Insbesondere beim Herstellen dieses weiteren Bauteilabschnitts mit einem generativen Fertigungsverfahren können Geometrien ausgebildet werden, die sich selbst durch Schmieden als Massivumformprozess, auch durch mehrfaches Schmieden, nicht erzeugen lassen, bedingt beispielsweise durch relativ lange Fließwege oder dadurch, dass sich diese Geometrien durch Schmieden schlichtweg nicht herstellen lassen, wie etwa Hinterschnitte. Ein solches Strukturbauteil wird man bezüglich der Aufteilung der Bereiche in durch Massivumformen, wie etwa Schmieden umgeformte Bereiche und solche, die durch ein anderes Fertigungsverfahren aufgebaut werden, typischerweise derart aufteilen, dass die bei der Anwendung des Strukturbauteils höheren, vor allem dynamischen Belastungen ausgesetzten Bereiche des Strukturbauteils massivumgeformte Bauteilabschnitte sind oder zumindest einen solchen Kern aufweisen. Ausgenutzt wird hierbei das für gegenüber derartigen Belastungen besonders widerstandsfähige Massivumformgefüge. Hier bietet sich das Schmieden als Massivumformprozess besonders an, da die damit erzielbaren Gefüge besonders hohen insbesondere dynamischen Beanstandungen Stand halten.

Bei den Untersuchungen, die zu dem Gegenstand dieser Erfindung geführt haben, musste man sich zunächst über die herrschende Lehre hinwegsetzen, dass ein solches, durch bestimmte Geometrien strukturiertes Strukturbauteil aus einem einzigen Stück hergestellt werden muss, um den an das Strukturbauteil gestellten Anforderungen zu genügen. Erst das Verlassen dieser Lehre eröffnete den Weg zu einer Aufteilung des Strukturbauteils in Bauteilabschnitte mit unterschiedlichen Anforderungsprofilen, mithin in ein Kernsegment und ein oder mehrere daran anzuformende Bauteilabschnitte, und zu dem Gegenstand des beanspruchten Verfahrens. So ist es beispielsweise bei einem Strukturbauteil mit einer oder mehreren Versteifungsrippen zum Erzielen von gewünschten Festigkeitseigenschaften ausreichend, wenn die Basisfläche bzw. die Wurzel einer solchen Rippe zusammen mit dem angrenzenden Kernsegment durch Massivumformen, etwa durch Schmieden geformt wird. Dieses stellt zugleich einen Anbindungssockel als Übergangszone, wie bereits vorstehend skizziert, dar. Die eigentliche Rippenausbildung bezüglich ihrer Höhe wird dann durch den anzuschließenden Bauteilabschnitt realisiert, beispielsweise durch ein generatives Fertigungsverfahren, typischerweise aufgetragen auf die Basisfläche bzw. die Wurzel. Gleiches gilt beispielsweise auch für die Ausbildung von Anschlusspunkten bestimmter Geometrie, die ein solches Strukturbauteil aufweisen kann. Zahlreiche andere Ausgestaltungen sind denkbar.

Bei dem nach diesem Verfahren hergestellten, mehrere Bauteilabschnitte aufweisenden Strukturbauteil wird dieses erst nach dem Anschluss des zumindest einen Bauteilabschnittes an das Kernsegment, welches dann eine komplettierte Vorform darstellt, in seine Endkontur gebracht. Dieses kann ein oder mehrschrittig erfolgen. Dieses in die Endkontur Bringen der komplettierten Vorform kann nur einige Abschnitte der komplettierten Vorform betreffen, typischerweise die an ein Kernsegment angeschlossenen Bauteilabschnitte, wodurch die Maßhaltigkeit der an das Kernsegment angeformten Bauteilabschnitte und auch ihr Übergang in das Kernsegment unter Einhaltung sehr enger Toleranzgrenzen gewährleistet ist.

Der Anschluss eines durch generative Fertigung erzeugten Bauteilabschnittes kann auf einem durch den vorangegangenen Massivumformschritt geformten Sockel, dessen Oberseite die Substratoberfläche bildet, erfolgen. Durch einen solchen an dem Kernsegment angeformten Sockel ist das eigentliche Kernsegment als Bauteilabschnitt, welches den Anforderungen eines höheren Anforderungsprofiles standhalten soll, von einer thermischen Beeinflussung oder einer oberflächennahen Materialdurchmischung als Folge des generativen Fertigungsverfahrens geschützt, sodass die durch das Schmieden eingestellten Werkstoff- und Gefügeeigenschaften in dem eigentlichen Kernsegment nicht oder jedenfalls nicht nennenswert durch den typischerweise lokal ausgeführten generativen Fertigungsschritt geändert werden. Insofern wird man den generativen Fertigungsschritt bezüglich seines Wärmeeintrages in das geschmiedete Kernsegment, kontrollieren, wobei an das Kernsegment angeformte Sockel, wie vorbeschrieben ihren Beitrag hierzu leisten können. Überdies wird durch einen derartigen Sockel die Kerbempfindlichkeit in dem Übergangsbereich reduziert.

Im Falle eines Schmiedeprozesses zum Herstellen des als Kernsegment dienenden Bauteilabschnittes wird der Schmiedeschritt typischerweise einstufig durchgeführt. Dieses schließt ein Nachpressen nach einem kurzen Lüftungsöffnen des Gesenkes ein. Einstufig bedeutet in diesem Zusammenhang, dass die Umformung in einem einzigen Gesenk vorgenommen wird. Auch ein mehrstufig ausgeführter Schmiedeschritt ist möglich, kann jedoch oftmals durch eine geschickte Auslegung des Strukturbauteils in Bezug auf die durch Schmieden geformten Bauteilabschnitte und den Einsatz eines unterschiedlichen Herstellungsverfahrens zum Herstellen des zumindest einen weiteren Bauteilabschnittes vermieden werden. Da durch diesen nicht die gesamte Formgebung des Strukturbauteils erfolgt, werden die zum Schmieden verwendeten Gesenke auch keiner übermäßigen Belastung (Auswaschung) unterworfen, sodass die Standzeiten der Gesenke entsprechend länger sind. Dieses wirkt sich bei einer Serienfertigung auch positiv auf die einzuhaltenden Toleranzen bei der Herstellung derartiger Strukturbauteile aus.

Dieses Verfahren eröffnet die Möglichkeit, ein Strukturbauteil in unterschiedlichen Varianten auszubilden. Das Gleichteil der unterschiedlichen Varianten wird durch den Massivumformschritt, beispielsweise einen Schmiedeprozess hergestellt. Mithin ist das beispielsweise geschmiedete Halbzeug bei allen Varianten eines solchen Strukturbauteils das Gleichteil, an das in den noch nicht endkonturnah oder endkonturgenau geformten Abschnitten für die Variantenbildung ein der gewünschten Variante entsprechender Bauteilabschnitt, durch ein generatives Fertigungsverfahren, angeschlossen wird. Sowohl die Anordnung der Schnittstellen für den Anschluss eines Bauteilabschnittes als auch die Formgebung der anzuschließenden Bauteilabschnitte können sich bei den einzelnen Varianten unterscheiden. Dadurch kann nicht nur der Materialeinsatz reduziert, sondern auch die gesamte Fertigungskette kosteneffizienter durchgeführt werden.

Bei derartigen fertigungshybriden Strukturbauteilen können der eine oder die mehreren weniger belasteten und beispielsweise durch ein generatives Fertigungsverfahren erzeugten Bauteilabschnitte zur Gewichtsreduzierung in einer Art und Weise optimiert werden, wie dieses auf herkömmliche Weise nicht oder nur mit einem unverhältnismäßig hohen Aufwand erzielt werden könnte. Beispielhaft sei an dieser Stelle die Ausbildung einer Hohlstruktur genannt. Eine solche Hohlstruktur kann ohne Einbußen hinsichtlich der Belastbarkeit dieses Bauteilabschnittes aufgrund der an dieses gestellten Anforderungen hinnehmen zu müssen, vorgenommen werden. Die Folge ist ein reduzierter Materialeinsatz und ein reduziertes Gewicht des fertigen Strukturbauteils. Ein geringerer Materialeinsatz ist gerade bei Strukturbauteilen mit relativ hohen Materialkosten ein besonderer Vorteil.

Das hybride Herstellungsverfahren erlaubt auch eine Ausbildung der Bauteilabschnitte auf dem Kernsegment mit einer gegenüber seiner Legierung unterschiedlichen Legierung. Hierbei kann es sich um eine Legierung mit einer unterschiedlichen Zusammensetzung seiner Legierungselemente handeln. Insofern kann das für die an das Kernsegment anzuschließenden Bauteilabschnitte verwendete Material speziell in Bezug auf die an diese Bereiche des Strukturbauteils bei der vorgesehenen Anwendung gestellten Anforderungen ausgewählt werden. Eine solche Ausgestaltung ist auch möglich, wenn das oder die an das Kernsegment anzuschließenden Bauteilabschnitte durch generative Fertigung unmittelbar auf dem Kernsegment als Substrat gebildet werden.

Durch Verwenden unterschiedlicher Werkstoffzusammensetzungen in dem Aufbau eines durch ein generatives Fertigungsverfahren zu erzeugenden Bauteilabschnittes können innerhalb desselben zum Beispiel auch Werkstoffgradienten und somit Gradienten in Bezug auf einen oder mehrere Festigkeitsparameter erzeugt werden. Ein solches Bauteil kann auch als werkstoffhybrides Bauteil angesprochen werden.

Der Einsatz eines generativen Fertigungsverfahrens zum Erzeugen eines Bauteilabschnittes auf dem geschmiedeten Halbzeug erlaubt es auch, dass in dieses Pulverpartikel oder Körner aus einem Material eingebaut werden, die besondere und von der zu erzeugenden Legierung unabhängige Eigenschaften aufweisen. So kann es sich bei diesem Material beispielsweise um ein solches handeln, welches bei der Verschmelzungstemperatur zum Verschmelzen der Pulverpartikel verdampft, um auf diese Weise eine gewisse Porosität in einem solchermaßen aufgebauten Bauteilabschnittes des Strukturbauteils zu erzeugen. Eingelagert werden können auf diese Weise auch in den durch das generative Fertigungsverfahren hergestellten Bauteilabschnitt Festschmierstoffe, wenn es sich bei dem zu erzeugenden Bauteilabschnitt beispielsweise um einen solchen handelt, der Teil eines Lagers, beispielsweise eine Lagerbuchse darstellen soll.

Wenn das oder die weiteren Bauteilabschnitte generativ auf dem Kernsegment als Substrat ausgebildet werden, wird es als vorteilhaft angesehen, wenn diejenigen Bereiche des typischerweise geschmiedeten Kernsegmentes - des Substrates - in Bezug auf den zumindest einen darauf mittels eines generativen Fertigungsverfahrens zu erzeugenden Bauteilabschnitt vorbehandelt und auf den generativen Fertigungsprozess vorbereitet wird. Dieses kann beispielsweise eine mechanische Vorbehandlung sein, etwa um die Kontaktoberfläche des Substrates zu dem darauf aufzutragenden Material zu vergrößern. Bei dem generativen Fertigungsverfahren handelt es sich gemäß einem Ausführungsbeispiel um ein Laser- oder Elektronenstrahlauftragsschweißen. In einem solchen Fall kann die Substratoberfläche vor dem ersten Aufbringen der durch den Laser- oder Elektronenstrahl zu verschmelzenden Partikel einer Strahlbehandlung unterworfen werden, um diesen Oberflächenbereich aufzurauen, wodurch die Anbindungsoberfläche vergrößert wird. Vorzugsweise wird ein solcher Schritt unmittelbar vor dem Beginn des Auftragsschweißens zum Erzeugen der auf der Substratoberfläche aufzubringenden Bereiche durchgeführt, da dieser Bereich dann zur Vorbereitung des generativen Fertigungsschrittes zugleich vorerwärmt wird. Als vorbereitende Maßnahme für den endkonturnahen Aufbau eines solchen Bereiches mittels eines generativen Fertigungsverfahrens kann auch allein ein entsprechendes Erwärmen des Oberflächenbereiches des Substrates dienen. Alleinig oder auch in Kombination mit einem der beiden vorgenannten Vorbehandlungsmaßnahmen kann die Substratoberfläche auch chemisch vorbehandelt werden, etwa um Oberflächenverunreinigungen oder aus dem Schmiedegesenk mitgeschlepptes Schmiermittel zu entfernen.

Wenn im Anschluss an die endkonturnahe Ausbildung des oder der durch ein generatives Fertigungsverfahren hergestellten Bauteilabschnitte auf dem geschmiedeten Halbzeug diese in ihre Endkontur oder in eine noch endkonturnähere Form durch Schmieden gebracht werden sollen, können die oberflächlichen Unregelmäßigkeiten, die das Laserauftragsschweißen, ebenso wie das Elektronenstrahlschweißen oder das Lichtbogenschweißen als generatives Fertigungsverfahren mit sich bringt, als Schmiertaschen genutzt werden, um den Materialfluss zu steuern.

Das sich an die Ausbildung der komplettierten Vorform anschließende Einstellen der Endkontur des Strukturbauteils kann ein- oder mehrschrittig erfolgen, typischerweise durch spanende Bearbeitung.

Eingesetzt werden für den massivumgeformten Rohling, beispielsweise einem Schmiederohling gemäß einer Ausgestaltung eine Titanlegierung, insbesondere eine (a+β)-Titanlegierung, etwa eine Ti-6Al-4V-Legierung. Nachfolgend ist die Erfindung anhand von Ausführungsbeispielen unter Bezugnahme auf die beigefügten Figuren beschrieben. Es zeigen:
- **Fig. 1:**: Eine Figurenfolge, die die Ergebnisse einzelner Herstellungsschritte zum Herstellen eines mehrere Bauteilabschnitte aufweisenden Strukturbauteils mit dem erfindungsgemäßen Verfahren zeigt, und
- **Fig. 2:**: die Herstellung eines weiteren Strukturbauteils gemäß einer anderen Ausgestaltung.

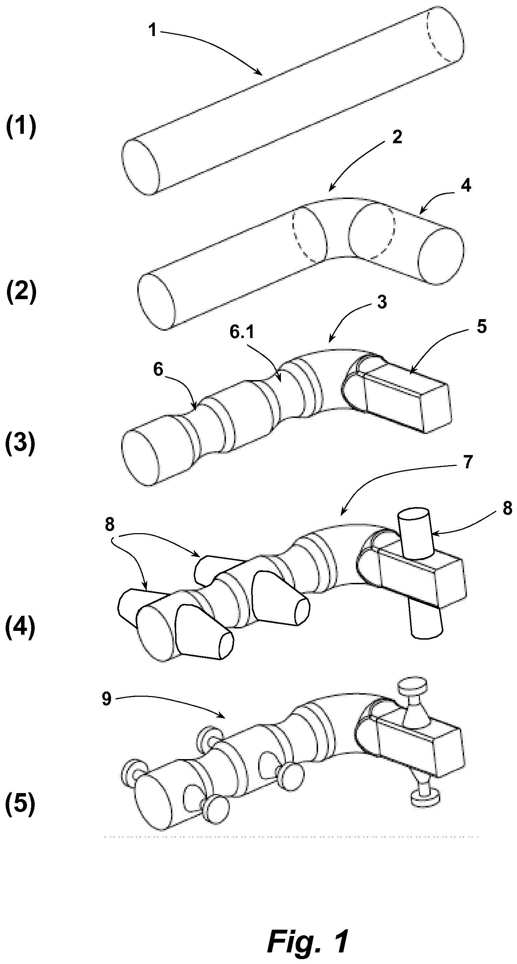

Die Figurenfolge der Figur 1 zeigt unter (1) einen Rohling 1 aus einer Ti-6Al-4V-Legierung als beispielhaften hochfesten Legierungswerkstoff. Bei dem Rohling 1 handelt es sich um einen gegossenen Barren. Bei dem dargestellten Ausführungsbeispiel wird der Rohling 1 in einem ersten Schritt (2) in eine Schmiedevorform 2 gebracht. Bei dem dargestellten Ausführungsbeispiel ist der Gussrohling 1 vorgeschmiedet und ein Abschnitt des Rohlings 1 um 90 Grad gegenüber dem übrigen Abschnitt mit einem Radius abgewinkelt worden, sodass in einer Seitenansicht der Schmiederohling L-förmig ausgebildet ist. Der Rohling weist ein (a+β)-Gefüge auf.

Zum Vorbereiten des Schmiedens dieses Schmiederohlings 2 wird dieser auf seine Schmiedetemperatur erwärmt, in ein Gesenk eingelegt und in die in (3) gezeigte Vorform 3 geschmiedet. Durch den Schmiedeprozess ist der kürzere Schenkel 4 des Schmiederohlings 2 in eine Vierkantform 5 gebracht worden. Diese schließt unter Zwischenschaltung von Übergangsbereichen an den Bogenabschnitt an. In den längeren Schenkel des Schmiederohlings 2 sind unter Verlängerung seiner Länge zwei Einschnürungen 6, 6.1 durch den Schmiedeschritt eingebracht worden. Die durch das Schmieden erstellte Vorform 3 ist in einigen Abschnitten bereits endkonturnah ausgeformt. Diese Vorform stellt bei dem dargestellten Ausführungsbeispiel das Kernsegment des späteren Strukturbauteils dar. Dieses Kernsegment ist derjenige Bauteilabschnitt, der einem höheren mechanischen Anforderungsprofil genügen muss als die weiteren, nachfolgend beschriebenen Bauteilabschnitte. Dieses gilt bei dem dargestellten Ausführungsbeispiel insbesondere in Bezug auf seine dynamische Belastbarkeit.

Das aus dem Rohling 1 zu fertigende Strukturbauteil weist eine gegenüber der Vorform 3 deutlich komplexere Formgebung auf. Um diese komplexere Formgebung zu erstellen, werden in denjenigen Bereichen der Vorform 3, die die weiteren Strukturen tragen sollen Rohformen, durch generatives Laserauftragsschweißen bei dem dargestellten Ausführungsbeispiel aufgebaut. Es versteht sich, dass auch andere Auftragsschweißverfahren eingesetzt werden können. Das Auftragsschweißen ist bezüglich der eingebrachten Wärme so durchgeführt worden, dass der Wärmeeintrag in das Kernsegment lokal nur sehr gering ist und auch eine Materialdurchmischung nur auf eine oberflächliche Randzone des Substrates beschränkt ist. Die durch generative Fertigung komplettierte Vorform 7 ist im Schritt (4) der Figur 1 gezeigt. Die durch das generative Verfahren erzeugten bzw. aufgebauten Bauteilabschnitte - die Rohformen für die weiteren Strukturen - sind mit dem Bezugszeichen 8 kenntlich gemacht. Bei dem dargestellten Ausführungsbeispiel sind die durch das generative Verfahren hergestellten Bereiche 8 aus Legierungspulver derselben Legierung hergestellt worden, aus der auch der Rohling 1 gefertigt ist. Auf dem Vierkantschenkel 5 der Vorform 3 sind an gegenüberliegenden Flächen zwei zylinderförmige Bereiche 8 durch das generative Fertigungsverfahren aufgebaut worden. Auf die Mantelfläche des längeren Schenkels der Vorform 3 sind kegelstumpfförmige Körper durch das generative Verfahren aufgebaut worden. Bei dem dargestellten Ausführungsbeispiel sind die an die Mantelfläche der Vorform 3 angrenzenden Abschnitte dieser kegelförmigen Körper als Hohlkörper ausgeführt. Das generative Fertigungsverfahren wurde als Laserauftragsschweißen durchgeführt.

Die endgültige Konturgebung der komplettierten Vorform 7 mit ihren durch das beschriebene generative Fertigungsverfahren aufgebauten Bauteilabschnitte 8 erfolgt bei dem dargestellten Ausführungsbeispiel durch eine spanende Bearbeitung (s. Schritt (5)). Die die Bauteilabschnitte 8 bildenden Rohformen werden durch Formfräsen in ihre in (5) gezeigte Endkontur gebracht. Bei diesem Bearbeitungsschritt werden auch diejenigen Bereiche der komplettierten Vorform 7 in ihre Endkontur gebracht, die durch den Schmiedeschritt nicht endkonturgenau ausgeformt sind.

Bei dem Strukturbauteil 9 handelt es sich um ein fiktives Strukturbauteil. Wesentlich bei diesem Strukturbauteil 9 ist, dass das durch die geschmiedete Vorform 3 geformte Kernsegment als Bauteilabschnitt einer erhöhten mechanischen Belastung ausgesetzt werden kann. Da die L-Form des Strukturbauteils 9 durch Schmieden geformt ist, genügt dieses Kernsegment des Strukturbauteils 9 auch hohen, daran gestellten Anforderungen ohne weiteres. Dieses ist durch das an das Kernsegment gestellte Anforderungsprofil auch der Fall. Die durch das generative Fertigungsverfahren erzeugten Bauteilabschnitte 8 und die daraus durch Formfräsen in Endkontur gebrachten Fortsätze müssen bei dem Einsatz des Strukturbauteils 9 diesen Anforderungen nicht genügen. Auch diese können höheren Belastungen ausgesetzt werden, müssen jedoch nicht den Belastungsanforderungen genügen, die das Strukturbauteil 9 in den Abschnitten seiner L-förmigen Vorform genügen muss. Wenn, wie dieses bei vorbekannten Verfahren der Fall ist, das Strukturbauteil 9 durch Schmieden einer Vorform und anschließende zerspanende Bearbeitung hergestellt werden würde, wäre dieses nur mit einer geringen Materialausnutzung möglich, was nicht nur aufwendiger, sondern auch kostenträchtiger wäre.

Den vorbeschriebenen Fertigungsschritten vorangestellt ist eine Aufteilung des Strukturbauteils 9 in bezüglich seines mechanischen Anforderungsprofils unterschiedliche Bauteilabschnitte, und zwar das durch die Vorform 3 gebildete Kernsegment als ein erster Bauteilabschnitt, der einem höheren Anforderungsprofil genügen muss, und den daran angeformten zweiten Bauteilabschnitten 8, die diesem hohen Anforderungsprofil nicht genügen müssen.

Nachdem das Strukturbauteil 9 in seine Endkontur gebracht worden ist, wird dieses einer Wärmebehandlung zum Homogenisieren des Gefüges unterworfen.

Bei dem Strukturbauteil 9 des dargestellten Ausführungsbeispiels handelt es sich um eine von mehreren Varianten, die sich durch die Anzahl der durch das generative Fertigungsverfahren aufgebauten Bauteilabschnitte 8 unterscheiden. Bei dem dargestellten Strukturbauteil 9 handelt es sich um dasjenige der mehreren Varianten, welches sämtliche der möglichen, sich bezüglich der Anzahl der Fortsätze unterscheidenden Varianten in sich vereint. So weist eine in den Figuren nicht dargestellte weitere Variante auf der Vierkantform 5 des kürzeren Schenkels nur einen einzigen durch das generative Verfahren aufgebrachten Bauteilabschnitt 8 und durch das Formfräsen in die Endkontur gebrachten Fortsatz auf. In einer weiteren Variante weist dieser Schenkel des Strukturbauteils 9 keine Fortsätze auf. Weitere Varianten bestehen in einer unterschiedlichen Auslegung an den längeren Schenkel angeformten Fortsätze.

Von besonderem Vorteil ist bei diesem Konzept, dass sämtliche Varianten auf ein und derselben Fertigungsstraße mit ein und denselben Werkzeugen hergestellt werden können.

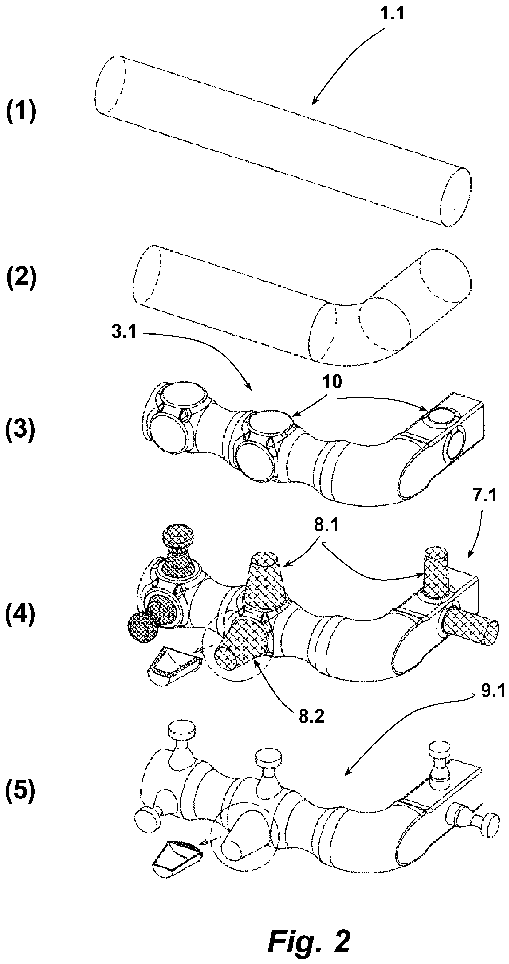

Figur 2 zeigte eine der Figurenfolge der Figur 1 entsprechende Figurenfolge, darstellend die hybride Herstellung eines weiteren Strukturbauteils 9.1. Bei dem Herstellungsverfahren der Figur 2 werden nach der Aufteilung des Strukturbauteils in bezüglich seines Anforderungsprofils unterschiedliche Bauteilabschnitte dieselben Schritte (1) bis (5) durchgeführt wie dieses zuvor bei dem Ausführungsbeispiel der Figur 1 erläutert worden ist. Aus diesem Grunde sind gleiche Merkmale bzw. Teile mit denselben Bezugszeichen, ergänzt um ein ".1" gekennzeichnet. Auch das Strukturbauteil 9.1 selbst ist dem vorbeschriebenen Strukturbauteil 9 der Figur 1 sehr ähnlich. Der Rohling 1.1 bei dem Ausführungsbeispiel der Figur 2 ist aus derselben Titanlegierung hergestellt worden wie der Rohling 1 des Ausführungsbeispiels der Figur 1. Das Strukturbauteil 9.1 unterscheidet sich von dem Strukturbauteil 9 durch seine Strukturierung, da die Fortsätze - und dementsprechend die durch generative Fertigung erstellten Bauteilbereiche 8.1, 8.2 - im Unterschied zu dem Strukturbauteil 9 einander nicht gegenüberliegend angeordnet sind. Ferner unterscheidet sich das Strukturbauteil 9.1 von dem Strukturbauteil 9 durch die Formgebung der geschmiedeten Vorform 3.1. Durch den Schmiedeprozess ist jeweils ein von dem Kernsegment der Vorform 3.1 abragender Sockel 10 zum Ausbilden eines Wurzelbereiches bzw. eines Übergangsbereiches bereitgestellt. Der Sockel 10 kann auch als Anbindungssockel angesprochen werden. Die Oberseite der Sockel 10 stellt die Substratoberfläche dar, auf die die generativ zu fertigenden Bauteilabschnitte 8.1, 8.2 aufgebracht werden. Auf diese Sockel 10 wird zum Herstellen der komplettierten Vorform 7.1 im Wege des generativen Fertigungsverfahrens das Material aufgebracht. Durch den zum Erstellen der Endkontur des Strukturbauteils 9.1 durchgeführten Formfrässchritt sind, wie vor allem an den Fortsätzen, die an den Vierkantschenkel angeformt sind, ebenfalls Teile des Ansatzes entfernt worden. Vorteilhaft bei einer solchen Ausgestaltung der geschmiedeten komplettierten Vorform 7.1 ist, dass die Anbindung des generativ aufgetragenen Materials von dem Faserverlauf der geschmiedeten Vorform in ihrem Kern beabstandet ist.

Bei diesem Ausführungsbeispiel ist der Bauteilabschnitt 8.2 als Hohlkörper ausgeführt, wie durch die Schnittdarstellungen dieses Bauteilabschnittes 8.2 in den Schritten (4) und (5) der Figur 2 gezeigt.

Nach dem Ausbilden des Strukturbauteils 9.1 in seiner Endkontur wird dieses ebenso wärmebehandelt und mit geringem Umformgrad umgeformt.

Die vorstehend beschriebenen Ausführungsbeispiele dienen der Erläuterung der Erfindung. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführung im Einzelnen erläutert werden müsste.

### Bezugszeichenliste

- 1, 1.1: Rohling
- 2: Schmiederohling
- 3,3.1: Vorform
- 4: Schenkel
- 5: Vierkantform
- 6,6.1: Einschnürung
- 7, 7.1: komplettierte Vorform
- 8, 8.1, 8.2: Bauteilabschnitt
- 9, 9.1: Strukturbauteil
- 10: Sockel

## Patentansprüche

1. Verfahren zum Herstellen eines verschiedene Bauteilabschnitte aufweisenden, einstückigen Strukturbauteils (9, 9.1) zum Aufbau einer größeren Struktur, wie diese typischerweise in der Luft- und Raumfahrttechnik eingesetzt werden, aus einem hochfesten Legierungswerkstoff, **dadurch gekennzeichnet, dass**
- das zu erstellende Strukturbauteil (9, 9.1) in zumindest zwei sich bezüglich ihres Anforderungsprofiles bei der späteren Verwendung des Strukturbauteils unterscheidende Bauteilabschnitte unterteilt wird, wobei ein Bauteilabschnitt (3, 3.1) als Kernsegment bei der Verwendung des Strukturbauteils (9, 9.1) einem in Bezug auf auftretende Belastungen höheren Anforderungsprofil und der zumindest eine weitere Bauteilabschnitt (8, 8.1, 8.2) einem geringeren Anforderungsprofil genügen muss,
- in einem ersten Fertigungsschritt zum Erstellen des Kernsegmentes (3, 3.1) mit den höheren Anforderungen ein Rohling (2) durch Massivumformen bereichsweise in eine endkonturnahe oder endkonturgenaue Form gebracht wird,
- in zumindest einem nachfolgenden Schritt auf zumindest einem durch den Massivumformschritt noch nicht in seine endkonturnahe oder endkonturgenaue Form gebrachten Oberflächenbereich des Kernsegmentes als Substrat zum Ausbilden des zumindest einen Bauteilabschnittes (8, 8.1, 8.2) mit dem geringeren Anforderungsprofil dieser Bauteilabschnitt durch ein generatives Fertigungsverfahren auf den vorgesehenen Oberflächenbereich des Rohlings aufgebracht wird, um auch diese Bereiche des massivumgeformten Kernsegments in eine endkonturnähere Form zu bringen und
- anschließend das auf diese Weise hergestellte Halbzeug als komplettierte Vorform (7, 7.1) ein- oder mehrschrittig in seine Endkontur gebracht wird.

2. Verfahren nach Anspruch 1, **dadurch gekennzeichnet, dass** sich das Anforderungsprofil des Kernsegmentes (3, 3.1) mit dem höheren Anforderungsprofil und dasjenige des oder der Bauteilabschnitte (8, 8.1, 8.2) mit dem geringeren Anforderungsprofil durch die jeweilige mechanische Belastbarkeit unterscheiden.

3. Verfahren nach Anspruch 1 oder 2, **dadurch gekennzeichnet, dass** das Strukturbauteil (9, 9.1) aus einer Titanlegierung, einer Aluminiumlegierung, einer Kobaltbasislegierung oder einer Nickelbasislegierung hergestellt wird.

4. Verfahren nach einem der Ansprüche 1 bis 3, **dadurch gekennzeichnet, dass** das generative Fertigungsverfahren, mit dem ein Bauteilabschnitt mit geringerem Anforderungsprofil erstellt wird, als Laserauftragsschweißen unter Verwendung von Feststoffpartikeln oder von Draht oder durch Lichtbogenauftragsschweißen oder durch Elektronenstrahlauftragsschweißen durchgeführt wird.

5. Verfahren nach einem der Ansprüche 1 bis 4, **dadurch gekennzeichnet, dass** für den generativen Fertigungsschritt zum Ausbilden eines Bauteilabschnittes mit geringerem Anforderungsprofil dieselbe Legierung verwendet wird, aus der auch das Kernsegment gefertigt ist.

6. Verfahren nach einem der Ansprüche 1 bis 4, **dadurch gekennzeichnet, dass** für den generativen Fertigungsschritt zum Ausbilden eines Bauteilabschnittes mit geringerem Anforderungsprofil eine sich von der Legierung des Kernsegmentes unterscheidende Legierung verwendet wird.

7. Verfahren nach einem der Ansprüche 1 bis 6, **dadurch gekennzeichnet, dass** zum endkonturnahen Ausbilden der durch den Schmiedeschritt noch nicht endkonturnah oder endkonturgenau geformten Bauteilabschnitte mehrere generative Fertigungsschritte durchgeführt werden.

8. Verfahren nach Anspruch 7, **dadurch gekennzeichnet, dass** zwischen zwei generativen Fertigungsschritten die generativ gebildeten Bauteilabschnitte durch Schmieden in eine endkonturnähere Form umgeformt werden und dass der nachfolgende generative Fertigungsschritt auf dem umgeformten Material des vorangegangenen Fertigungsschrittes durchgeführt wird.

9. Verfahren nach einem der Ansprüche 1 bis 8, **dadurch gekennzeichnet, dass** vor dem Durchführen eines generativen Fertigungsschrittes die Auftragsoberfläche des als Substrates dienenden Kernsegmentes für den generativen Fertigungsschritt vorbehandelt wird.

10. Verfahren nach einem der Ansprüche 1 bis 9, **dadurch gekennzeichnet, dass** die endkonturnahen Bauteilabschnitte (8, 8.1) der komplettierten Vorform durch Schmieden und/oder durch eine spanende Bearbeitung in ihre Endkontur gebracht werden.

11. Verfahren nach einem der Ansprüche 1 bis 10, **dadurch gekennzeichnet, dass** das Kernsegment durch Schmieden als Massivumformschritt erstellt wird.

12. Verfahren nach einem der Ansprüche 3 bis 11, **dadurch gekennzeichnet, dass** als Titanlegierung eine (α+β)-Titanlegierung verwendet wird.

13. Verfahren nach Anspruch 12, **dadurch gekennzeichnet, dass** als Titanlegierung eine Ti-6Al-4V-Legierung eingesetzt wird.

14. Verfahren nach einem der Ansprüche 1 bis 13, **dadurch gekennzeichnet, dass** als Strukturbauteil (9, 9.1) eines von mehreren Varianten dieses Strukturbauteils hergestellt wird, wobei durch den Schritt des Massivumformens zum Ausbilden des Kernsegmentes dieses als Gleichteil für mehrere Varianten hergestellt wird und die Variantenbildung durch generative Fertigung gebildeten Bauteilabschnitte (8, 8.1, 8.2) erfolgt.

## Claims

1. Method for producing a structural component (9, 9.1), comprising different single-piece component sections, for setting up a larger structure, such as are typically used in aerospace technology, made of a high-strength alloy material, **characterised in that**
- the structural component (9, 9.1) is divided into at least two component sections which differ with respect to their requirement profiles when the structural component is later used, wherein one component section (3, 3.1), as a core segment in the use of the structural component (9, 9.1), must meet a higher requirement profile with respect to occurring loads, and the at least one further component section (8, 8.1, 8.2) must meet a lower requirement profile,
- in a first production step for producing the core segment (3, 3.1) with the higher requirements, a blank (2) is brought to a near end-contour or precise end-contour shape by a massive forming process in some regions,
- in at least one following step, on at least one surface region of the core segment, which has not yet been brought into its near end-contour or precise end-contour shape by the massive forming process, and as a substrate for the forming of the at least one component section (8, 8.1, 8.2) with the lower requirement profile, this component section is applied onto the predetermined surface region of the blank, in order to bring also these regions of the massive-formed core segment into a shape closer to the end-contour, and
- following this, the semi-finished product produced in this manner, as a completed pre-form (7, 7.1) is then brought into its end contour in one or more steps.

2. Method according to claim 1, **characterised in that** the requirement profile of the core segment (3, 3.1) with the higher requirement profile and that of the component section(s) (8, 8.1, 8.2) with the lower requirement profile differ in the respective mechanical loading capacity.

3. Method according to claim 1 or 2, **characterised in that** the structural component (9, 9.1) is produced from a titanium alloy, an aluminium alloy, a cobalt-base alloy, or a nickel-base alloy.

4. Method according to any one of claims 1 to 3, **characterised in that** the generative manufacturing process with which the structural component with the lower requirement profile is produced is carried out by laser deposition welding with the use of solid material particles or from wire or by arc deposition welding or by electron beam deposition welding.

5. Method according to any one of claims 1 to 4, **characterised in that,** for the generative manufacturing step for the forming of a component section with a lower requirement profile, the same alloy is used from which the core segment is also produced.

6. Method according to any one of claims 1 to 4, **characterised in that,** for the generative manufacturing step for the forming of a component section with a lower requirement profile, an alloy is used which is different from the alloy of the core segment.

7. Method according to any one of claims 1 to 6, **characterised in that,** for the forming close to the end-contour of the component sections which have not yet been formed by the forging step so as to be close to the end-contour or precisely at the end-contour, several generative production steps are carried out.

8. Method according to claim 7, **characterised in that** between two generative production steps the generatively formed component sections are formed by forging into a form closer to the end-contour, and that the following generative production step is carried out on the formed material from the preceding production step.

9. Method according to any one of claims 1 to 8, **characterised in that,** before the undertaking of a generative production step, the deposit surface of the core segment serving as substrate is pre-treated for the generative production step.

10. Method according to any one of claims 1 to 9, **characterised in that** the component sections (8, 8.1) close to the end-contour of the completed preform are brought into their end-contour by forging and/or by later processing or machining.

11. Method according to any one of claims 1 to 10, **characterised in that** the core segment is produced by forging as the massive forming step.

12. Method according to any one of claims 3 to 11, **characterised in that** as a titanium alloy use is made of a (α+β) titanium alloy.

13. Method according to claim 12, **characterised in that** as a titanium alloy a Ti-6AI-4V alloy is used.

14. Method according to any one of claims 1 to 13, **characterised in that,** as the structural component (9, 9.1), one of several variants of this structural component is produced, wherein, by the step of massive forming for producing the core segment, this is produced as a common part for several variants, and the variant formation then takes place by generative production of the component sections (8, 8.1, 8.2).

## Revendications

1. Procédé de fabrication d'un élément de structure (9, 9.1) d'un seul tenant, présentant différents tronçons, destiné à la construction d'une structure plus grande, telle qu'elles sont typiquement utilisées dans l'aéronautique et l'aérospatiale, constitué d'un matériau d'alliage haute résistance, **caractérisé en ce que** :
- l'élément de structure (9, 9.1) à fabriquer se subdivise en au moins deux tronçons différents par rapport à leur profil d'exigence lors de l'utilisation ultérieure de l'élément de structure, un tronçon (3, 3.1), lequel fait office de segment d'âme lors de l'utilisation de l'élément de structure (9, 9.1), devant répondre à un profil d'exigence élevé en ce qui concerne les forces exercées et l'au moins autre tronçon (8, 8.1, 8.2), à un profil d'exigence moindre,
- au cours d'une première étape de fabrication du segment d'âme (3, 3.1) satisfaisant à des exigences plus élevées, une ébauche (2) est forgée par endroit et mise dans une forme qui correspond précisément ou est proche du contour final,
- au cours d'au moins une étape suivante, on met en place, sur au moins une zone de surface du segment d'âme qui n'a pas encore été mis dans sa forme qui correspond précisément ou est proche du contour final et qui fait office de substrat pour réaliser l'au moins un tronçon (8, 8.1, 8.2) satisfaisant à un profil d'exigence moindre, ce tronçon au moyen d'un procédé de fabrication génératif sur la zone de surface prévue de l'ébauche, afin de mettre également ces zones du segment d'âme forgé dans une forme plus proche du contour final, et
- le produit semi-fini ainsi fabriqué en tant que préforme (7, 7.1) complétée est ensuite mis en une ou plusieurs étapes dans sa forme de contour finale.

2. Procédé selon la revendication 1, **caractérisé en ce que** le profil d'exigence du segment d'âme (3, 3.1) satisfaisant au profil d'exigence plus élevé et celui du ou des tronçons (8, 8.1, 8.2) satisfaisant au profil d'exigence moindre se différencient par leur capacités de charge mécanique respectives.

3. Procédé selon la revendication 1 ou 2, **caractérisé en ce que** l'élément de structure (9, 9.1) est fabriqué dans un alliage de titane, un alliage d'aluminium, un alliage à base de cobalt ou un alliage à base de nickel.

4. Procédé selon l'une des revendications 1 à 3, **caractérisé en ce que** le procédé de fabrication générative utilisé pour fabriquer un tronçon avec un profil d'exigence moindre, est réalisé par un soudage par rechargement au laser, en utilisant des particules de matières solides ou du fil, ou par un soudage par rechargement à l'arc ou par un soudage par rechargement par faisceau d'électrons.

5. Procédé selon l'une des revendications 1 à 4, **caractérisé en ce que** pour l'étape de fabrication générative, destinée à réaliser le tronçon au profil d'exigence moindre, on utilise le même alliage que l'alliage avec lequel est également fabriqué le segment d'âme.

6. Procédé selon l'une des revendications 1 à 4, **caractérisé en ce que** pour l'étape de fabrication générative, destinée à réaliser le tronçon au profil d'exigence moindre, on utilise un alliage différent de l'alliage du segment d'âme.

7. Procédé selon l'une des revendications 1 à 6, **caractérisé en ce que** plusieurs étapes de fabrication génératives sont réalisées pour obtenir des tronçons dont la forme après l'étape de forgeage ne correspond pas encore précisément ou exactement au contour final.

8. Procédé selon la revendication 7, **caractérisé en ce que,** entre deux étapes de fabrication générative, les tronçons formés par fabrication générative sont forgés pour mettre leur contours dans une forme proche de la forme finale et **en ce que** l'étape de fabrication générative suivante est réalisée sur le matériau dont la forme a été modifiée au cours de l'étape de fabrication précédente.

9. Procédé selon l'une des revendications 1 à 8, **caractérisé en ce que,** avant de réaliser une étape de fabrication générative, la surface de rechargement du segment d'âme faisant office de substrat est prétraitée en vue de l'étape de fabrication générative.

10. Procédé selon l'une des revendications 1 à 9, **caractérisé en ce que** les tronçons (8, 8.1) de la préforme complétée, dont les contours sont proches de leur forme finale, sont mis dans leur forme finale par forgeage et/ou par un usinage avec enlèvement de copeaux.

11. Procédé selon l'une des revendications 1 à 10, **caractérisé en ce que** le segment d'âme est mis en forme au cours d'une étape de forgeage.

12. Procédé selon l'une des revendications 3 à 11, **caractérisé en ce que** l'on utilise en tant qu'alliage de titane un alliage de titane (α+β).

13. Procédé selon la revendication 12, **caractérisé en ce que** l'on utilise en tant qu'alliage de titane un alliage Ti-6Al-4V.

14. Procédé selon l'une des revendications 1 à 13, **caractérisé en ce que** l'on fabrique en tant qu'élément de structure (9, 9.1) l'une des différentes variantes de cet élément de structure, sachant qu'au cours de l'étape de forgeage pour réaliser le segment d'âme, celui-ci est fabriqué en tant que pièce identique pour la réalisation de plusieurs variantes et que la réalisation des variantes s'effectue par des tronçons (8, 8.1, 8.2) réalisés par fabrication générative.
